# EUROPEAN PATENT APPLICATION

(11) **EP 2 259 212 A1**
(43) Date of publication of application: **08.12.2010**
(21) Application number: 09723658.2
(22) Date of filing: 23.03.2009
(51) Int. Cl.: G06K 17/00, H01Q 3/24, H01Q 7/00, H04B 5/02

(54) **RFID TAG READER AND ANTENNA UNIT FOR RFID TAG**

(30) Priority: 24.03.2008 JP 2008075739; 25.03.2008 JP 2008078270
(71) Applicant: Sanden Corporation, Isesaki-shi Gunma 372-8502 (JP)
(72) Inventor: MATSUMOTO, Naoto, Isesaki-shi Gunma 372-8502 (JP); KUWAKO, Yuji, Isesaki-shi Gunma 372-8502 (JP); TABATA, Masaru, Isesaki-shi Gunma 372-8502 (JP); SATOU, Masaaki, Isesaki-shi Gunma 372-8502 (JP); SHIMAMOTO, Gaku, Isesaki-shi Gunma 372-8502 (JP); KASHIHARA, Tatsuki, Isesaki-shi Gunma 372-8502 (JP)
(74) Representative: Haley, Stephen
(86) International application number: PCT/JP2009/055645
(87) International publication number: WO 2009/119494

(57) **Abstract**

A control unit 100 generates a control signal for selecting an antenna unit 200, and transmits the control signal to the antenna unit 200. Based on the antenna selecting control signal, each antenna unit 200 performs control so as to achieve impedance matching of a matching circuit 212 when the own antenna unit 200 is selected, and so as not to achieve impedance matching of the matching circuit 212 when the own antenna unit 200 is not selected.

## Description

### TECHNICAL FIELD

The present invention relates to an RFID tag reader that reads a unique identifier, which is set in an RFID tag in advance, from the RFID tag which is attached to a distributed commercial product in a field of physical distribution or the like in a noncontact manner.

### BACKGROUND ART

In the RFID tag reader (hereinafter, simply called "reader") of this kind, an antenna for communication with an RFID tag, and a high-frequency circuit connected to the antenna are essential components. For these components, various implementations are adopted in accordance with the use purpose and the like of the reader. For example, as shown in Patent Document 1, in the case of the purpose of reading the RFID tags attached to the commercial products displayed on a store shelf, a thin antenna unit with substantially the same area as that of the shelf is installed on the top surface or the bottom surface of the shelf board. The high-frequency circuit is housed in a casing which is installed on a proper location of the shelf. The high-frequency circuit and the antenna unit are connected with a coaxial cable having a predetermined characteristic impedance. The antenna unit includes a loop antenna element and a matching circuit intended for impedance matching. In such a reader, the unique identifiers of the RFID tags are sequentially read with respect to a number of commercial products displayed on the shelf, and the read data is transmitted to equipment such as a computer.
PATENT DOCUMENT 1: Japanese Patent Publication 2001-118037

### DISCLOSURE OF THE INVENTION

### PROBLEMS TO BE SOLVED BY THE INVENTION

Incidentally, when the RFID tags of the commercial products displayed on the shelf are read as described above, a plurality of antenna units need to be placed side by side on one shelf for the purpose of recognizing which positions on the shelf the commercial products with RFID tags are placed. Further, when the shelf area is large, a plurality of antenna units are sometimes placed similarly side by side. Further, instead of arranging a plurality of antenna units side by side, a plurality of loop antenna elements are sometimes provided side by side in one antenna unit. In the case of having a plurality of antennas (antenna units or loop antenna elements) like this, the reader sequentially repeats reading processing for each of the antennas.

However, there arises the problem that when power is supplied to a certain antenna for communication with an RFID tag, the other antenna adjacent to the antenna interferes with it, and the reading range by the desired antenna is narrowed.

Further, when a plurality of loop antenna elements are provided side by side in one antenna unit as described above, the distance between the RFID tag and the loop antenna element can be kept small wherever on the antenna unit the commercial product is placed. Thereby, reading precision of the RFID tag can be improved. However, in this case, control of a number of loop antenna elements is required, and therefore, the device is complicated and increased in cost. More specifically, about the number of loop antenna elements in the antenna unit, there is a trade-off relationship between reading precision, and complication and increase in cost. Therefore, an optimum antenna unit is required.

The first object of the present invention is to provide an RFID tag reader with a wide reading range. Further, the second object of the present invention is to provide an antenna which is favorable in reading precision, and is capable of minimizing complication and increase in cost.

### MEANS FOR SOLVING THE PROBLEMS

In order to attain the above described object, an RFID tag reader according to the present invention includes a plurality of antenna elements for communication with an RFID tag, a high-frequency circuit which processes a signal for communication with the RFID tag, a signal line which connects an antenna element and the high-frequency circuit, a control means which outputs a control signal for antenna element selection, a matching means which matches an impedance of a high-frequency signal to that of the antenna element, and a matching control means which performs control so that the impedance of the high-frequency signal is matched to that of the antenna element selected by the control signal of the control means, and the impedance of the high-frequency signal is not matched to that of the antenna element which is not selected, wherein while the impedance of the high-frequency signal is matched to that of one of the antenna elements, the impedance of the high-frequency signal is not matched to those of the other antenna elements adjacent to the antenna element.

According to the present invention, when one antenna element is selected from a plurality of antenna elements, impedance matching of the antenna element is achieved, and impedance matching of the other antenna element adjacent to the antenna element is not achieved. Thereby, the electromagnetic field formed by one of the antenna elements can be prevented from being coupled with the other adjacent antenna elements. Such coupling generally narrows the formation range of the electromagnetic field formed by one antenna element. Therefore, according to the present invention, narrowing of the RFID tag reading range can be prevented.

As an example of the concrete operation of the aforesaid matching control means, the operation of changing the circuit constant in the matching means is cited. An example of a preferred mode of the present invention is cited, wherein a set of the matching means and the matching control means is provided for each of the antenna elements. Further, another example of the preferred mode of the present invention is cited, wherein out of the plurality of antenna elements, the number of antenna elements simultaneously selected is one.

Further, an example of the preferred mode of the present invention is cited, which further includes a superimposing means which superimposes the aforesaid control signal onto the high-frequency signal outputted to the antenna element from the high-frequency circuit, and a separating means which separates a superimposed signal inputted from the superimposing means via the signal line into the high-frequency signal and the control signal, supplies the separated high-frequency signal to the aforesaid matching circuit, and supplies the separated control signal to the aforesaid matching control means.

According to the present invention, the control signal for antenna element selection is transmitted by being superimposed on the signal line which transmits the high-frequency signal, and therefore, the signal line for transmitting the control signal does not have to be separately provided. Thereby, installability is improved.

Further, an example of the preferred mode of the present invention is cited, which includes a plurality of antenna units, wherein the antenna elements are disposed one by one in each of the antenna units. Another example is cited, which includes an antenna unit, wherein a plurality of antenna elements are disposed in the antenna unit.

A further concrete example of the latter antenna unit is cited, wherein each of the antenna elements is constituted of a loop antenna element, each of the loop antenna elements is disposed on a same plane, and a part of one loop antenna element overlaps a part of an adjacent loop antenna element. Another concrete example is cited, wherein each of the loop antenna elements is wound in a shape of an eight-figure. Another concrete example is cited, wherein each of the loop antenna elements is twisted at an intermediate portion so that a plurality of small loops are formed and directions of magnetic fields, which are formed by the respective small loops when the loop antenna element is energized, are in opposite directions in the small loops adjacent to each other.

In the antenna unit as above, the possibility is increased, that even the RFID tag which is disposed inside one loop antenna element and is difficult to read with the one loop antenna element can be read by the other loop antenna element. Accordingly, the reading precision can be improved while the number of loop antenna elements is minimized.

The objects, configuration and effect other than described above of the present invention will become apparent in the following detailed description.

### ADVANTAGES OF THE INVENTION

As described above, according to the RFID tag reader according to the present invention, when one antenna is selected from a plurality of antennas, the impedance is matched to that of the antenna, and the impedance is not matched to those of the other antennas adjacent to the antenna. Thereby, the electromagnetic field formed by one antenna can be prevented from being coupled with the other adjacent antennas. Such coupling narrows the formation range of the electromagnetic field formed by one antenna. Accordingly, narrowing of the RFID tag reading range can be prevented.

Further, according to the antenna unit according to the present invention, inside the loop of one loop antenna element, an adjacent loop antenna element is disposed. Thereby, the possibility is increased, that even the RFID tag which is disposed inside one loop antenna element and is difficult to read with the one loop antenna element can be read by the other loop antenna element. Accordingly, the reading precision can be improved while the number of loop antenna elements is minimized,

### BRIEF DESCRIPTION OF THE DRAWINGS

Figure 1 is a schematic view of an RFID tag reader according to a first embodiment;
Figure 2 is a functional block diagram of a control unit according to the first embodiment;
Figure 3 is a top view explaining an internal structure of an antenna unit according to the first embodiment;
Figure 4 is a functional block diagram of the antenna unit according to the first embodiment;
Figure 5 is a functional block diagram of a centralized control unit according to the first embodiment;
Figure 6 is a diagram explaining an output signal of an amplifier circuit;
Figure 7 is a diagram explaining a control signal;
Figure 8 is a diagram explaining a transmission signal;
Figure 9 is a functional block diagram of an antenna unit according to a second embodiment;
Figure 10 is a functional block diagram of a control unit according to a third embodiment;
Figure 11 is a functional block diagram of an antenna unit according to the third embodiment;
Figure 12 is a functional block diagram of a control unit according to a fourth embodiment;
Figure 13 is a functional block diagram of an antenna unit according to the fourth embodiment;
Figure 14 is a top view explaining an internal structure of an antenna unit according to a fifth embodiment;
Figure 15 is a top view explaining an internal structure of an antenna unit according to a sixth embodiment; and
Figure 16 is a top view explaining an internal structure of an antenna unit according to another example of the sixth embodiment.

### DESCRIPTION OF SYMBOLS

10 ... commercial product, 11 ... RFID tag, 100 ... control unit, 102 ... tag communication control section, 130, 131 ... DC bias applying circuit, 150, 151 ... control signal generating section, 200 ... antenna unit, 202, 202a to 202d ... loop antenna, 210 ... matching circuit unit, 211 ... DC-AC separating circuit, 212 ... matching circuit, 213 ... control signal discriminating circuit, 214 ... impedance adjusting circuit, 215 ... switch circuit, 216 ... switch control circuit, 400 ... coaxial cable, 410, 420 ... control signal cable

### BEST MODE FOR CARRYING OUT THE INVENTION

### (First embodiment)

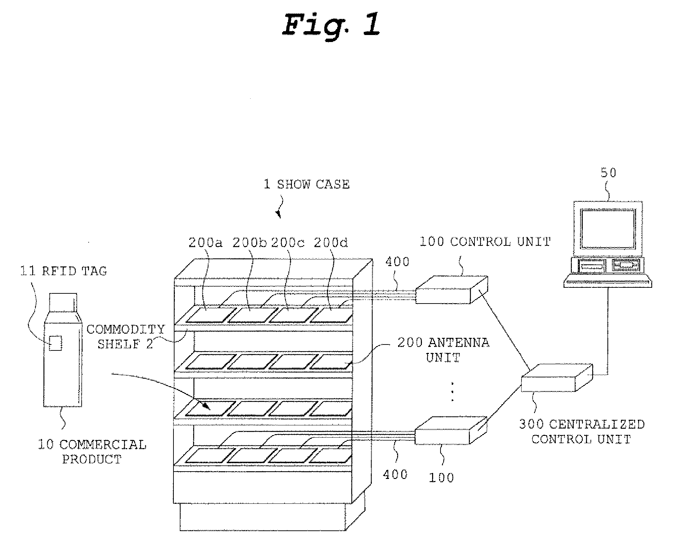

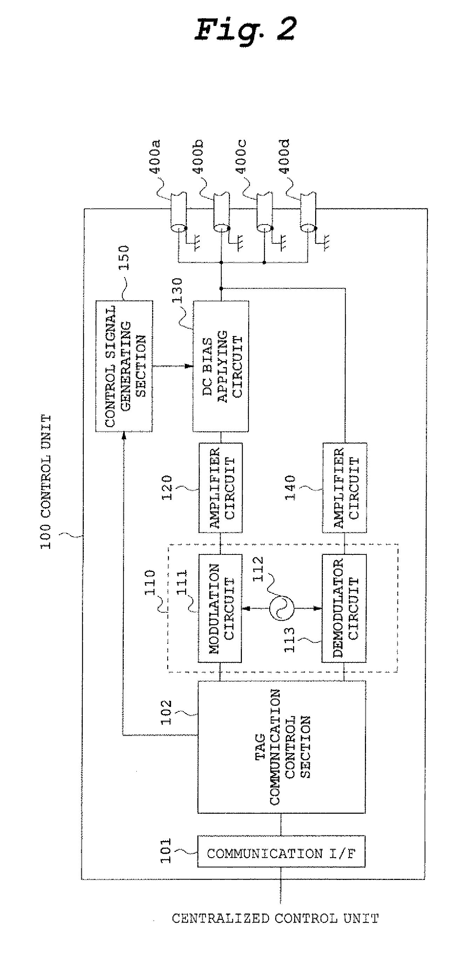

An RFID tag reader according to one embodiment of the invention of the present application will be described with reference to the drawings. Figure 1 is a general schematic view of the RFID tag reader, and Figure 2 is a functional block diagram of a control unit.

The reader according to the present embodiment is used for the purpose of reading a unique number as a unique identifier of an RFID tag 11 from the RFID tag 11 attached to a commercial product 10 displayed on a showcase 1.

The showcase 1 includes commodity shelves 2 in a plurality of layers for displaying the commercial products 10 thereon, and a cooling mechanism (not illustrated) for cooling the commercial products 10. The cooling mechanism is similar to the conventionally known ones, and therefore, the description of it will be omitted here. A plurality (four in the present embodiment) of antenna units 200a to 200d for communicating with the RFID tags 11 of the displayed commercial products 10 are placed on the top surface of each of the commodity shelves 2. The respective antenna units 200a to 200d are disposed side by side in the lateral direction on the top surface of each of the commodity shelves 2. Further, the showcase 1 includes control units 100 connected to the respective antenna units 200a to 200d via coaxial cables 400a to 400d, and a centralized control unit 300 which performs centralized control of the respective control units 100. The control unit 100 reads the unique numbers which are set in the tags in advance from the RFID tags 11 by using the respective antenna units 200a to 200d to be connected. The centralized control unit 300 totalizes the unique numbers of the RFID tags 11 which are read by the respective control units 100, and transmits the summarized data to a computer 50 which is placed in the store. The RFID tag reader according to the present embodiment is configured by connecting the aforementioned control units 100 and the respective antenna units 200a to 200d with the coaxial cables 400a to 400d.

The control unit 100 includes a communication interface 101 for connecting to the centralized control unit 300, a tag communication control section 102 which controls communication with the RFID tag 11, a modulation circuit 111 which modulates an output signal from the tag communication control section 102 into a high-frequency signal, an oscillating circuit 112 which generates a carrier wave, an amplifier circuit 120 which amplifies the high-frequency signal, and a DC bias applying circuit 130 which applies a DC bias to the high-frequency signal from the amplifier circuit 120. Further, the control unit 100 includes an amplifier circuit 140 which amplifies the high-frequency signal received from each of the antenna units 200a to 200d, and a demodulator circuit 113 which demodulates a communication signal from the high-frequency signal. Further, the control unit 100 includes a control signal generating section 150 which generates the control signals for selecting the antenna units 200a to 200d. The aforementioned modulation circuit 111, the demodulator circuit 113 and the oscillating circuit 112 are implemented on an exclusive communication IC 110.

The control signal generating section 150 generates and sends out a control signal for antenna selection based on the selection instruction for the antenna units 200a to 200d from the tag communication control section 102. The control signal for the antenna selection is a DC signal of the voltage value corresponding to each of the antenna units 200a to 200d. The voltage values corresponding to the respective antenna units 200a to 200d are different values from one another. The DC bias applying circuit 130 applies a DC bias to the high-frequency signal from the amplifier circuit 120 with the voltage value of the control signal by the control signal generating section 150. In other words, the DC bias applying circuit 130 superimposes the control signal onto the high-frequency signal.

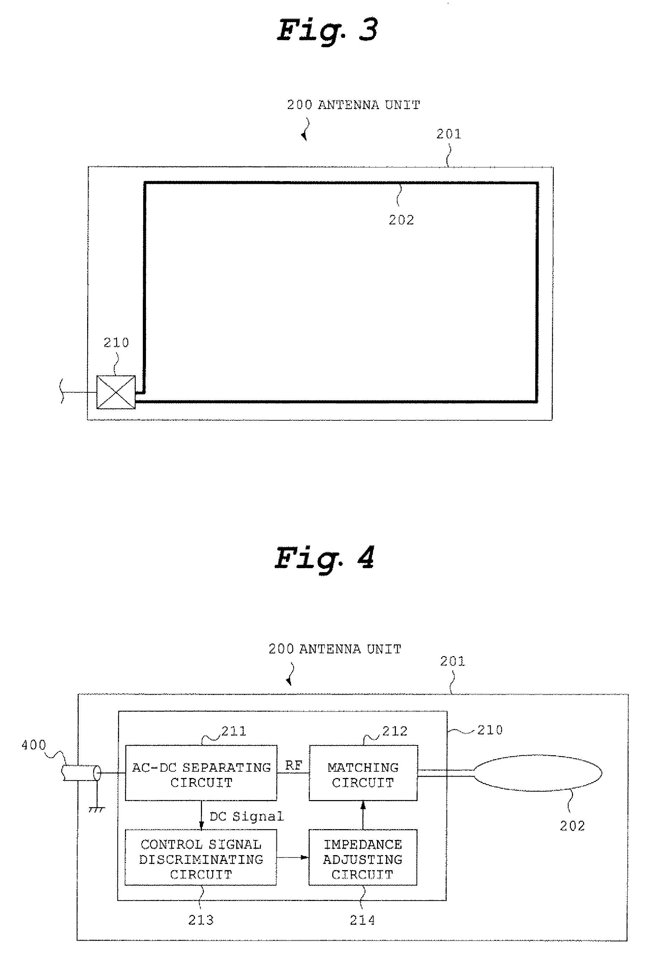

Next, the configuration of each of the antenna units 200a to 200d will be described with reference to Figures 3 and 4. Figure 3 is a top view explaining the structure of the inside of the antenna unit. Figure 4 is a functional block diagram of the antenna unit. The respective antenna units 200a to 200d have the same configurations, and therefore, the subscripts of the reference numerals are omitted in Figures 3 and 4.

As shown in Figure 3, the antenna unit 200 includes a loop antenna 202 provided inside a casing 201 in the shape of a thin box, and a matching circuit unit 210 connected to the loop antenna 202. The loop antenna 202 is formed from a metal member of, for example, copper foil, a copper wire or the like. Further, the loop antenna 202 is disposed to draw a rectangle along the inner perimeter portion of the casing 201. The matching circuit unit 210 is connected to the coaxial cable 400 via a connector (not illustrated).

As shown in Figure 4, the matching circuit unit 210 includes an AC-DC separating circuit 211, a matching circuit 212, a control signal discriminating circuit 213 which discriminates a control signal, and an impedance adjusting circuit 214 which performs constant control of the matching circuit 212.

The DC-AC separating circuit 211 separates the signal received from the control unit 100 into a DC component and an AC component. The voltage of the separated DC component is the bias value applied by the DC bias applying circuit 130 of the control unit 100. The bias value is the voltage value of the control signal for antenna selection as described above. Meanwhile, the separated AC component is the high-frequency signal outputted from the amplifier circuit 120 at the transmission side. Accordingly, the AC-DC separating circuit 211 functions as the separating circuit of the high-frequency signal and the control signal for antenna selection.

The control signal discriminating circuit 213 discriminates whether the control signal for antenna selection separated by the AC-DC separating circuit 211 is for selecting the own antenna unit 200. In more concrete, the control signal discriminating circuit 213 of each of the antenna units 200a to 200d holds the voltage value of the control signal corresponding to the own antenna unit as a constant. The control signal discriminating circuit 213 performs discrimination processing by comparing the aforementioned voltage value and the control signal for antenna selection by using a comparing circuit or the like.

The impedance adjusting circuit 214 controls the circuit constant of the matching circuit 212 so as to be able to obtain impedance matching of the loop antenna 202 when the control signal for antenna selection corresponds to the own antenna unit 200 in the control signal discriminating circuit 213. Meanwhile, the impedance adjusting circuit 214 controls the circuit constant of the matching circuit 212 so that the impedance of the loop antenna 202 does not match, when the control signal for antenna selection does not correspond to the own antenna unit 200 in the control signal discriminating circuit 213.

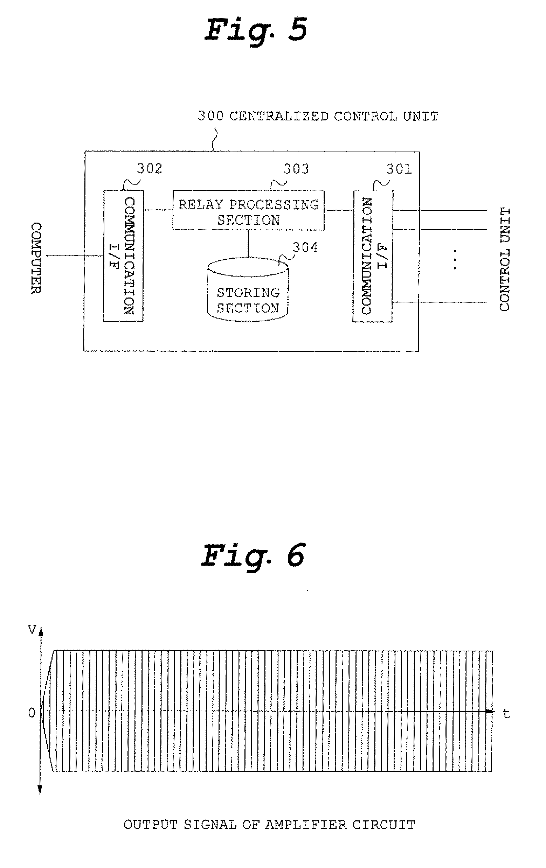

Next, the centralized control unit 300 will be described with reference to Figure 5. Figure 5 is a functional block diagram of the centralized control unit. As shown in Figure 5, the centralized control unit 300 includes a communication interface 301 for connecting to the control unit 100, a communication interface 302 for connecting to the computer 50, a relay processing section 303 which totalizes the unique numbers of the RFID tag 11 received from each of the control units 100 and transmits the totalized result to the computer 50, and a storing section 304 which is used in totalizing processing of the unique numbers in the relay processing section 303. The relay processing section 303 sequentially demands data transmission from the control unit 100 to be connected, receives the unique numbers of the RFID tag 11 from each of the control units 100, and temporarily stores the unique numbers in the storing section 304. The relay processing section 303 then transmits the information stored in the storing section 304 to the computer 50. Here, the relay processing section 303 transmits the data to the computer 50 only when the stored data is changed. More specifically, the relay processing section 303 transmits only the differential information to the computer 50.

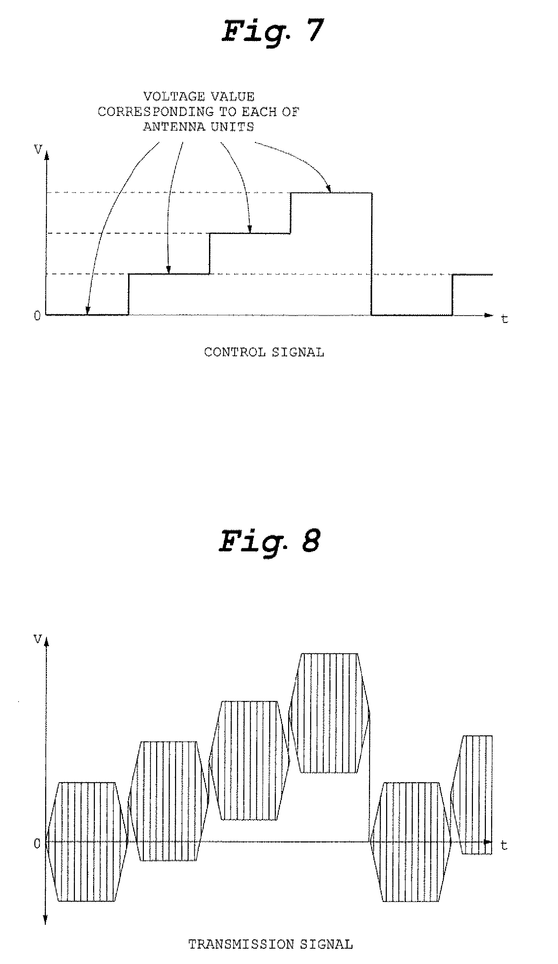

Next, the reading operation of the RFID tag 11 in the reader will be described. First, the tag communication control section 102 instructs the control signal generating section 150 to select any one of the antenna units 200a to 200d. Here, the antenna unit 200a is assumed to be selected. The tag communication control section 102 outputs a communication message in accordance with the communication protocol with the RFID tag 11. The output signal of the tag communication control section 102 is modulated onto a carrier wave supplied from the oscillating circuit 112, by the modulation circuit 111. The high-frequency signal outputted from the modulation circuit 111 is amplified by the amplifier circuit 120. Meanwhile, the control signal generating section 150 outputs the control signal of the voltage value corresponding to the antenna unit 200a selected based on the selection instruction from the tag communication control section 102. Thereby, a DC bias is applied to the high-frequency signal from the amplifier circuit 120 correspondingly to the voltage value of the antenna selecting control signal in the DC bias applying circuit 130. The high-frequency signal outputted from the DC bias applying circuit 130 is transmitted to the respective antenna units 200a to 200d via the coaxial cable 400. Figure 6 shows the high-frequency signal outputted from the amplifier circuit 120. Further, Figure 7 shows the control signal outputted from the control signal generating section 150. Further, Figure 8 shows the transmission signal outputted from the DC bias applying circuit 130.

The high-frequency signal transmitted to each of the antenna units 200a to 200d is separated into a DC signal and an AC signal in the AC-DC separating circuit 211. The DC signal corresponds to the DC bias applied by the aforementioned DC bias applying circuit 130, that is, the antenna selecting control signal. The voltage value of the antenna selecting control signal corresponds to any one of the antenna units 200a to 200d. The control signal discriminating circuit 213 discriminates whether the voltage value corresponds to the own antenna unit based on the voltage value of the antenna selecting control signal. If the control signal discriminating circuit 213 discriminates that the own antenna unit is selected, impedance of the matching circuit 212 is matched with the loop antenna 202 by the impedance adjusting circuit 214. Meanwhile, if it is discriminated that the other antenna unit is selected, the impedance of the matching circuit 212 is not matched with the loop antenna 202 by the impedance adjusting circuit 214. Thereby, if the own antenna unit is selected, the high-frequency signal separated in the AC-DC separating circuit 211 is radiated from the loop antenna 202. Meanwhile, if the own antenna unit is selected, radiation of the high-frequency signal from the loop antenna 202 is weakened to such an extent as to be incapable of communicating with the RFID tag 11.

The RFID tag 11 which receives the high-frequency signal operates with the high-frequency signal as a power supply, and issues a response signal. The response signal is received by the loop antenna 202 of the antenna unit 200a. The response signal received by the loop antenna 202 is inputted to the amplifier circuit 140 at the reception side through the matching circuit 212, the AC-DC separating circuit 211 and the coaxial cable 400. The high-frequency signal amplified in the amplifier circuit 140 is demodulated by the demodulator circuit 113. The demodulated signal is inputted into the tag communication control section 102.

By the operation as above, the communication processing with the RFID tag 11 using one antenna unit 200a is completed. The tag communication control section 102 repeats the above described processing by sequentially switching the selected antenna unit 200a to the other antenna units 200b to 200d, and thereby, can perform the communication processing using all the antenna units 200a to 200d.

The point to be noted here is that the impedance of the matching circuit 212 is matched in the antenna units 200a to 200d which are being selected, but in the other antenna units 200a to 200d adjacent to the antenna units 200a to 200d, the impedance of the matching circuit 212 is not matched. Therefore, the electromagnetic fields formed by the loop antennas 202 of the antenna units 200a to 200d which are being selected hardly receive the influence by the loop antennas 202 of the other antenna units 200a to 200d. Thereby, the reading range of the RFID tag 11 in each of the antenna units 200a to 200d can be prevented from being narrowed.

As above, according to the RFID tag reader according to the present embodiment, even when a plurality of antenna units 200a to 200d are included, interference of the antenna unit used in reading processing and the other antenna units can be prevented, and therefore, narrowing of the reading range can be prevented. Further, in the RFID tag reader according to the present embodiment, the high-frequency signal for communication with the RFID tag 11 and the antenna selecting control signal can be transmitted with one coaxial cable 400, and therefore, installation workability is improved.

### (Second embodiment)

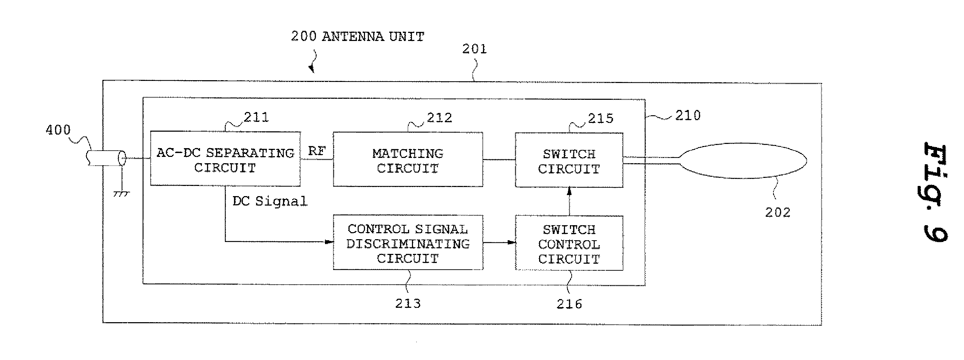

Next, an RFID tag reader according to a second embodiment of the present invention will be described with reference to Figure 9. Figure 9 is a functional block diagram of an antenna unit.

The present embodiment differs from the first embodiment in the configuration of the antenna unit. The other configuration is similar to that of the first embodiment, and therefore, only the difference will be described here.

The antenna unit 200 includes the loop antenna 202 and the matching circuit unit 210 as in the first embodiment. The matching circuit unit 210 includes the AC-DC separating circuit 211, the matching circuit 212, the control signal discriminating circuit 213 which discriminates a control signal, a switch circuit 215 which electrically connects and disconnects the matching circuit 212 and the loop antenna 202 in a high-frequency band, and a switch control circuit 216 which controls the switch circuit 215. The AC-DC separating circuit 211 and the control signal discriminating circuit 213 are similar to those of the first embodiment. The matching circuit 212 is adjusted so as to be able to achieve impedance matching when the loop antenna 202 is connected thereto by the switch circuit 215.

The switch circuit 215 has a switching element such as, for example, a transistor and a diode, and connects and disconnects both or one of both terminals of the loop antenna 202. When connection is released, at least one of the terminals of the loop antenna 202 is in an open state. Note that this can be understood as mismatching the impedance with the loop antenna 202.

When the antenna selecting control signal corresponds to the own antenna unit 200 in the control signal discriminating circuit 213, the switch control circuit 216 controls the switch circuit 215 so that the loop antenna 202 is connected. Meanwhile, when the antenna selecting control signal does not corresponds to the own antenna unit 200 in the control signal discriminating circuit 213, the switch control circuit 216 controls the switch circuit 215 so that connection with the loop antenna 202 is cut off.

According to the RFID tag reader according to the present embodiment, even when a plurality of antenna units 200a to 200d are included, interference of the antenna unit used for reading processing and the other antenna units can be prevented, and therefore, narrowing of the reading range can be prevented, as in the first embodiment. Further, in the RFID tag reader according to the present embodiment, the high-frequency signal for communication with the RFID tag 11 and the antenna selecting control signal can be transmitted with one coaxial cable 400, and therefore, the installation workability is improved.

The above described switch circuit 215 disconnects both or one of the terminals of the loop antenna 202, but may disconnect the intermediate point of the loop in the loop antenna 202.

### (Third embodiment)

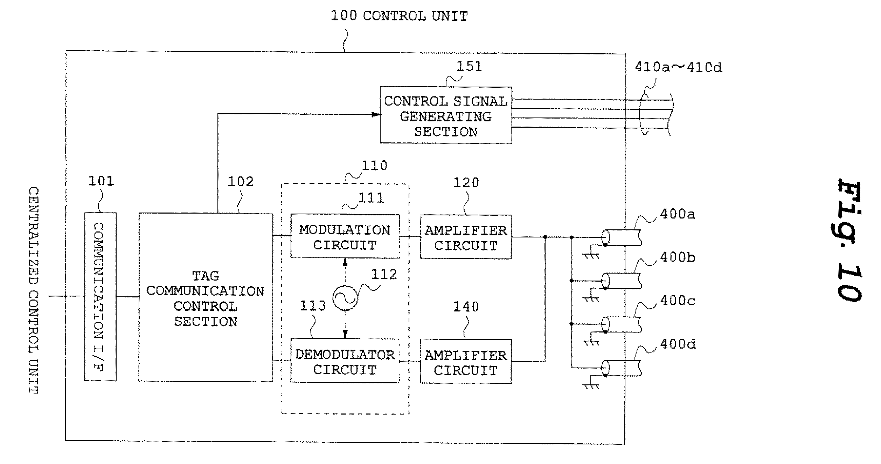

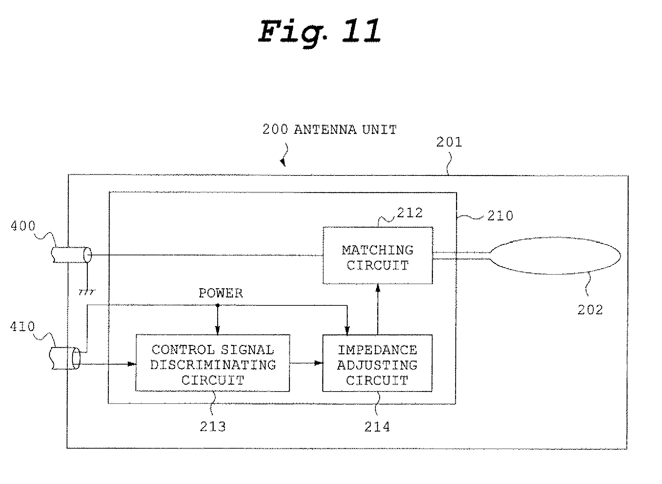

An RFID tag reader according to a third embodiment of the present invention will be described with reference to Figures 10 and 11. Figure 10 is a functional block diagram of a control unit. Figure 11 is a functional block diagram of an antenna unit.

The present embodiment differs from the first embodiment in the transmission method of the antenna selecting control signal. The other configuration is similar to that of the first embodiment, and therefore, only the difference will be described here.

As shown in Figure 10, the control unit 100 includes the communication interface 101 for connecting to the centralized control unit 300, the tag communication control section 102 which controls communication with the RFID tag 11, the modulation circuit 111 which modulates the output signal of the tag communication control section 102 onto a high-frequency signal, the oscillating circuit 112 which generates a carrier wave, and the amplifier circuit 120 which amplifies the high-frequency signal. Further, the control unit 100 includes the amplifier circuit 140 which amplifies the high-frequency signal received from each of the antenna units 200a to 200d, and the demodulator circuit 113 which demodulates a communication signal from the high-frequency signal. Further, the control unit 100 includes a control signal generating section 151 which generates the control signal for selecting the antenna units 200a to 200d.

The control signal generating section 151 generates and sends out the control signal for antenna selection based on the selection instruction for the antenna units 200a to 200d from the tag communication control section 102. The control signal for antenna selection is the digital signal corresponding to each of the antenna units 200a to 200d. The output signal from the control signal generating section 151 is transmitted to each of the antenna units 200a to 200d by the control signal cables 410a to 410d corresponding to the respective antenna units 200a to 200d. The control signal cables 410a to 410d include the DC power supply lines (not illustrated) for the respective antenna units 200a to 200d. More specifically, the control unit 100 supplies a DC power supply to each of the antenna units 200a to 200d.

As shown in Figure 11, the matching circuit unit 210 of the antenna unit 200 includes the matching circuit 212, the control signal discriminating circuit 213 which discriminates a control signal, and the impedance adjusting circuit 214 which performs constant control of the matching circuit 212. The coaxial cable 400 is directly connected to the matching circuit 212. Further, the control signal cable 410 is directly connected to the control signal discriminating circuit 213. Further, the power supply line housed in the control signal cable 410 is connected to the control signal discriminating circuit 213 and the impedance adjusting circuit 214.

The control signal discriminating circuit 213 discriminates whether the digitized antenna selecting control signal which is transmitted by the control signal cable 410 is the one selecting the own antenna unit 200.

In the RFID tag reader according to the present embodiment, the wiring amount between the control unit 100 and the antenna unit 200 is large, but the circuits of the control unit 100 and the antenna unit 200 can be simplified, as compared with the first embodiment. The other operation and effect are similar to those of the first embodiment.

The present embodiment is described as the modified example of the first embodiment, but the similar modification also can be applied in the RFID tag reader according to the second embodiment.

### (Fourth embodiment)

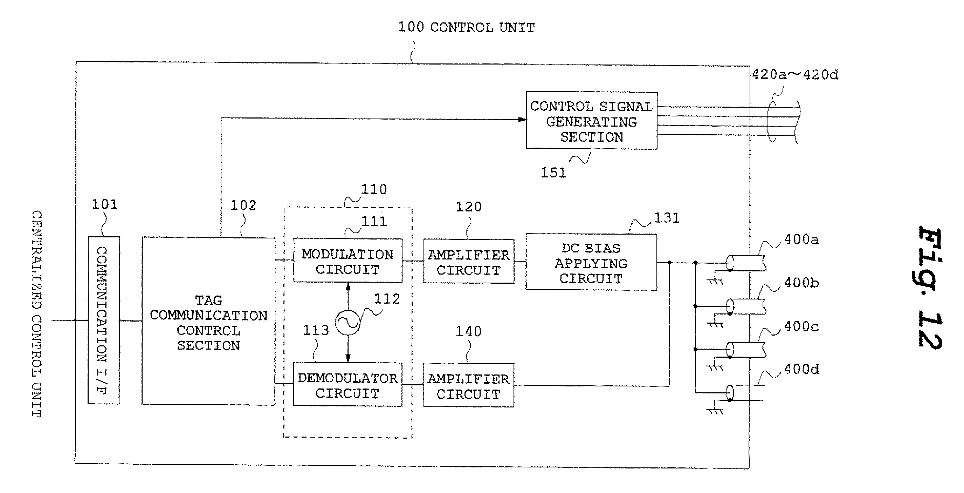

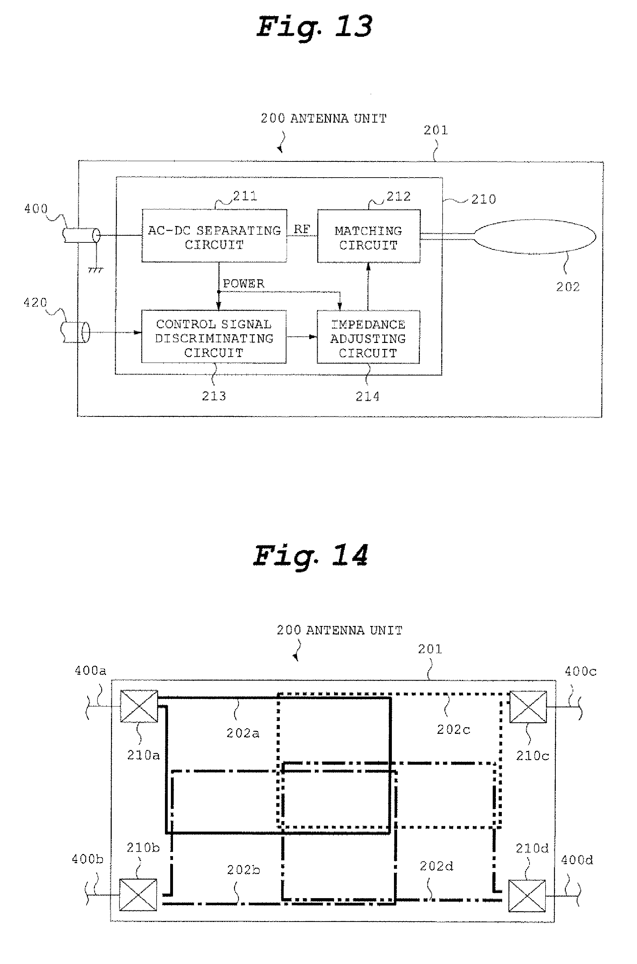

An RFID tag reader according to a fourth embodiment of the present invention will be described with reference to Figures 12 and 13. Figure 12 is a functional block diagram of a control unit. Figure 13 is a functional block diagram of an antenna unit.

The present embodiment differs from the first embodiment in the transmission method of an antenna selecting control signal. Further, the present embodiment differs from the third embodiment in the method for supplying power to the antenna unit. The other configuration is similar to those of the first and third embodiments, and therefore, only the difference will be described.

As shown in Figure 12, the control unit 100 includes the communication interface 101 for connecting to the centralized control unit 300, the tag communication control section 102 which controls communication with the RFID tag 11, the modulation circuit 111 which modulates the output signal of the tag communication control section 102 onto a high-frequency signal, the oscillating circuit 112 which generates a carrier wave, the amplifier circuit 120 which amplifies the high-frequency signal, and a DC bias applying circuit 131 which applies a DC bias to the high-frequency signal from the amplifier circuit 120. Further, the control unit 100 includes the amplifier circuit 140 which amplifies the high-frequency signal received from each of the antenna units 200a to 200d, and the demodulator circuit 113 which demodulates a communication signal from the high-frequency signal. Further, the control unit 100 includes a control signal generating section 151 which generates the control signal for selecting the antenna units 200a to 200d.

The DC bias applying circuit 131 applies a DC bias to the high-frequency signal from the amplifier circuit 120. The voltage value of the DC bias is a predetermined value unlike that of the first embodiment. The DC bias is used as the power supply in the antenna units 200a to 200d.

The control signal generating section 151 generates and sends out the control signal for antenna selection based on the selection instruction for the antenna units 200a to 200d from the tag communication control section 102. The control signal for antenna selection is the digital signal corresponding to each of the antenna units 200a to 200d. The output signal from the control signal generating section 151 is transmitted to the respective antenna units 200a to 200d by control signal cables 420a to 420d corresponding to the respective antenna units 200a to 200d.

As shown in Figure 13, the matching circuit unit 210 of the antenna unit 200 includes the AC-DC separating circuit 211, the matching circuit 212, the control signal discriminating circuit 213 which discriminates a control signal, and the impedance adjusting circuit 214 which performs constant control of the matching circuit 212. The coaxial cable 400 is directly connected to the matching circuit 212. Further, a control signal cable 420 is directly connected to the control signal discriminating circuit 213.

The AC-DC separating circuit 211 separates the signal received from the control unit 100 into a DC component and an AC component. The voltage of the separated DC component is the bias value applied by the DC bias applying circuit 131 of the control unit 100. The separated DC signal is supplied to the control signal discriminating circuit 213 and the impedance adjusting circuit 214 as a power supply. Meanwhile, the separated AC component is the high-frequency signal outputted from the amplifier circuit 120 at the transmission side, and the high-frequency signal is inputted into the matching circuit 212.

In the RFID tag reader according to the present embodiment, the wiring amount between the control unit 100 and the antenna unit 200 is large, but the circuits of the control unit 100 and the antenna unit 200 can be simplified, as compared with the first embodiment. The other operation and effect are similar to those of the first embodiment.

The present embodiment is described as the modified example of the first embodiment, but the similar modification also can be applied in the RFID tag reader according to the second embodiment.

### (Fifth embodiment)

An RFID tag reader according to a fifth embodiment of the present invention will be described with reference to Figure 14. Figure 14 is a top view explaining an internal structure of an antenna unit.

The present embodiment differs from each of the above described embodiments in the structure of the antenna unit 200. In concrete, in each of the above described embodiments, one antenna unit 200 includes only one loop antenna 202, and the wide reading range is secured by arranging a plurality of antenna units 200a to 200d side by side on the commodity shelf 2. In the present embodiment, a plurality of loop antennas 202 are included in one antenna unit 200. Therefore, in the present embodiment, one antenna unit is disposed on each of the commodity shelves 2. The number of antenna units on the commodity shelf 2 may be properly selected and increased in accordance with the area or the like of the commodity shelf 2.

As shown in Figure 14, the antenna unit 200 includes a plurality of (four in the present embodiment) loop antennas 202a to 202d provided inside a casing 201 in the shape of a thin box, and the matching circuit units 210a to 210d connected to the respective loop antennas 202a to 202d. In Figure 14, the solid line, the dotted line, the alternate long and short dash line, and the chain double-dashed line are used to clarify the position of each loop antenna 202. Each of the loop antennas 202a to 202d is formed from a metal member of, for example, copper foil, a copper wire or the like. Further, the respective loop antennas 202a to 202d are disposed in a rectangular form along four blocks each of 2 by 2 by dividing the bottom surface of the casing 201 into nine blocks in a matrix form. Accordingly, as shown in Figure 14, parts of the loop antennas 202a to 202d overlap parts of the other adjacent loop antennas 202a to 202d. In other words, in the central portions of the loops in one of the loop antennas 202a to 202d, the wirings of the other adjacent loop antennas 202a to 202d are disposed. The respective control circuit units 210a to 210d are connected to the control unit 100 via the coaxial cables 400a to 400d. The configurations of the control circuit units 210a to 210d and the control unit 100 are similar to those of the first embodiment, and therefore, the explanation of them will be omitted here.

Further, the reading operation of the RFID tag in the present embodiment is similar to that of the first embodiment. Accordingly, in the loop antennas 202a to 202d which are being selected, impedance matching by the matching circuit 212 is achieved, but in the other loop antennas 202a to 202d adjacent to the loop antennas 202a to 202d, impedance matching by the matching circuit 212 is not achieved. Therefore, the electromagnetic fields formed by the loop antennas 202a to 202d which are being selected hardly receive the influence by the other loop antennas 202a to 202d. Thereby, narrowing of the reading range of the RFID tag 11 in each of the loop antennas 202a to 202d can be prevented.

As above, according to the RFID tag reader according to the present embodiment, even when a plurality of loop antennas 202a to 202d are included, interference of the loop antenna used in reading processing and the other loop antennas can be prevented, and therefore, narrowing of the reading range can be prevented. Further, in the RFID tag reader according to the present embodiment, the high-frequency signal for communication with the RFID tag 11 and the antenna selecting control signal can be transmitted with one coaxial cable 400, and therefore, installation workability is improved.

Further, according to the RFID tag reader according to the present embodiment, at least parts of the respective loop antennas 202a to 202d overlap the adjacent loop antennas 202a to 202d. In other words, inside one of the loop antennas 202a to 202d, the wirings of the other adjacent loop antennas 202a to 202d are disposed. Thereby, the possibility increases, that even the RFID tag 11 which is disposed inside one of the loop antennas 202a to 202d and is difficult to read with the one of the loop antennas 202a to 202d can be read by the other loop antennas 202a to 202d. Accordingly, reading precision can be improved while the number of loop antennas 202 is minimized.

The present embodiment is explained as the modified example of the first embodiment, but the similar modification also can be applied in the RFID tag readers according to the second to fourth embodiments.

Further, in the present embodiment, four of the loop antennas 202 are provided in the antenna unit 200, but any number of loop antennas 202 may be provided if only the number of loop antennas 202 is two or more.

### (Sixth embodiment)

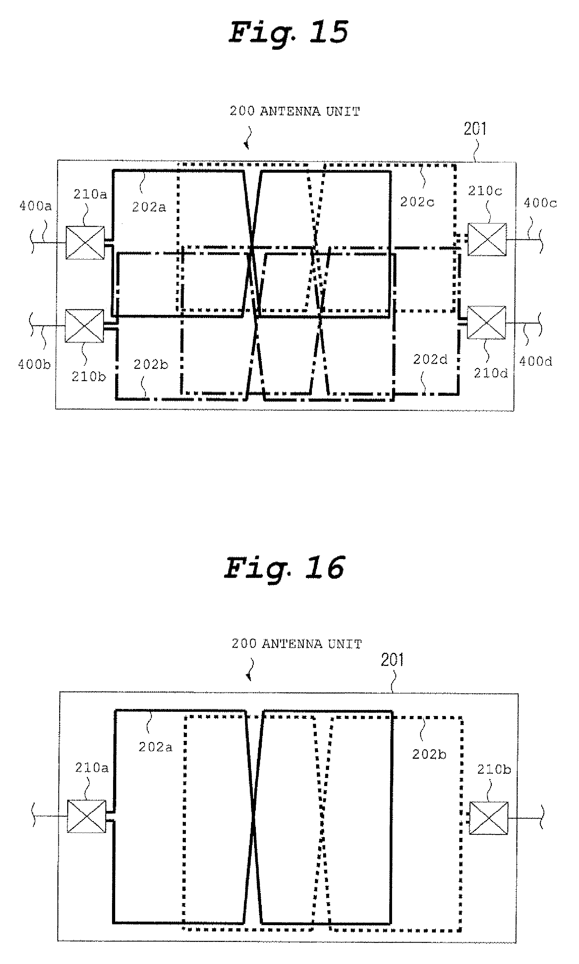

An RFID tag reader according to a sixth embodiment of the present invention will be described with reference to Figure 15. The present embodiment differs from the fifth embodiment in the structure of the loop antenna in the antenna unit. The other configuration is similar to that of the fifth embodiment, and only the difference will be described here.

Figure 15 shows a top view explaining the structure of the inside of the antenna unit. In Figure 15, the solid line, the dotted line, the alternate long and short dash line, and the chain double-dashed line are used to clarify the position of each loop antenna 202.

As in the fifth embodiment, the antenna unit 200 includes a plurality of (four in the present embodiment) loop antennas 202a to 202d provided inside the casing 201 in the shape of a thin box, and the matching circuit units 210a to 210d connected to the respective loop antennas 202a to 202d. Each of the loop antennas 202a to 202d is formed from a metal member of, for example, copper foil, a copper wire or the like. Further, each of the loop antennas 202a to 202d is wound to be in the shape of an "eight-figure" forming two small groups by being twisted at the central portion by 180 degrees. Thereby, the electromagnetic fields formed by the respective small groups when the loop antennas 202a to 202d are energized are in the opposite directions from each other among the small loops. Parts of the respective loop antennas 202a to 202d are disposed to overlap parts of the other adjacent loop antennas 202a to 202d. In more detail, inside the small loops of one of the loop antennas 202a to 202d, the wirings of the other loop antennas 202a to 202d are disposed. The other configuration is similar to that of the fifth embodiment.

According to the present embodiment, the possibility increases, that even the RFID tag 11 which is disposed inside one of the loop antennas 202a to 202d and is difficult to read with the one of the loop antennas 202a to 202d can be read by the other loop antennas 202a to 202d as in the fifth embodiment. Accordingly, reading precision can be improved while the number of loop antennas 202 is minimized. The other operation and effect are similar to those of the fifth embodiment.

Further, in the present embodiment, four of the loop antennas 202 are provided in the antenna unit 200, but any number of loop antennas 202 may be provided if only the number of loop antennas 202 is two or more. For example, as shown in Figure 16, the number of loop antennas 202 may be two.

The embodiments of the present invention are described in detail above, but the present invention is not limited to them. For example, in each of the above described embodiments, the showcase is described as the installation place for the reader, but the use purpose of the invention of the present application is not limited to this.

Further, in the above described first and second embodiments, as the method for superimposing the control signal, the method is shown as an example, which subjects the DC bias with the voltage value corresponding to the control signal to the high-frequency circuit, but the other superimposing method may be adopted, For example, various methods are conceivable such as, for example, amplitude modulation, frequency modulation, and the method for transmitting a digital signal in the stopping period by stopping the high-frequency signal for a predetermined period.

Further, in the above described fifth and sixth embodiments, one antenna unit 200 is provided for one commodity shelf 2, but a plurality of antenna units 200 may be provided.

## Claims

1. An RFID tag reader, comprising:
a plurality of antenna elements for communication with an RFID tag;
a high-frequency circuit which processes a signal for communication with the RFID tag;
a signal line which connects the antenna element and the high-frequency circuit;
a control means for outputting a control signal for antenna element selection;
a matching means for matching an impedance of a high-frequency signal to the antenna element; and
a matching control means for controlling so that the impedance of the high-frequency signal is matched to the antenna element selected by the control signal of the control means, and the impedance of the high-frequency signal is not matched to the antenna element which is not selected,
wherein while the impedance of the high-frequency signal is matched to one of the antenna elements, the impedance of the high-frequency signal is not matched to other antenna elements adjacent to the matched antenna element.

2. The RFID tag reader according to claim 1,
wherein said matching control means changes a circuit constant in the matching means.

3. The RFID tag reader according to claim 1,
wherein a set of the matching means and the matching control means is provided for each of the antenna elements.

4. The RFID tag reader according to claim 1,
wherein out of the plurality of antenna elements, the number of antenna elements simultaneously selected is one.

5. The RFID tag reader according to claim 1, further comprising:
a superimposing means for superimposing said control signal onto the high-frequency signal outputted to the antenna element from the high-frequency circuit; and
a separating means which separates a superimposed signal inputted from the superimposing means via the signal line into the high-frequency signal and the control signal, supplies the separated high-frequency signal to said matching circuit, and supplies the separated control signal to said matching control means.

6. The RFID tag reader according to claim 6,
wherein a set of said separating means, matching means and matching control means is provided for each of the antenna elements.

7. The RFID tag reader according to claim 1, further comprising:
a plurality of antenna units,
wherein the antenna elements are disposed one by one in each of the antenna units.

8. The RFID tag reader according to claim 1, further comprising;
an antenna unit,
wherein a plurality of antenna elements are disposed in the antenna unit.

9. The RFID tag reader according to claim 8,
wherein each of the antenna elements comprises a loop antenna element, each of the loop antenna elements is disposed on a same plane, and a part of one loop antenna element overlaps a part of an adjacent loop antenna element.

10. The RFID tag reader according to claim 9,
wherein each of the loop antenna elements is wound in a shape of an eight-figure.

11. The RFID tag antenna device according to claim 9,
wherein each of the loop antenna elements is twisted at an intermediate portion so that a plurality of small loops are formed and directions of magnetic fields, which are formed by the respective small loops when the loop antenna element is energized, are in opposite directions in the small loops adjacent to each other.

12. An RFID tag antenna unit for reading an RFID tag within a communication range, comprising:
a plurality of loop antenna elements disposed on a same plane,
wherein a part of one of the loop antenna elements overlaps a part of an adjacent loop antenna element.

13. The RFID tag antenna unit according to claim 1
wherein each of the loop antenna elements is wound in a shape of an eight-figure.

14. The RFID tag antenna unit according to claim 1,
wherein each of the loop antenna elements is twisted at an intermediate portion so that a plurality of small loops are formed, and directions of magnetic fields, which are formed by the respective small loops when the loop antenna element is energized, are in opposite directions in the small loops adjacent to each other.

15. The RFID tag antenna unit according to any one of claims 12 to 14,
wherein a matching circuit is included in each of the loop antenna elements.
